# EUROPÄISCHE PATENTANMELDUNG

(11) **EP 1 029 576 A1**
(43) Veröffentlichungstag der Anmeldung: **23.08.2000**
(21) Anmeldenummer: 99810145.5
(22) Anmeldetag: 18.02.1999
(51) Int. Cl.: B01D 46/04, B01D 46/42

(54) **Vorrichtung zur Reinigung eines Filters**

(71) Anmelder: Jetclean GmbH, 8200 Schaffhausen (CH)
(72) Erfinder: Zimmerling, Frank, 8200 Schaffhausen (CH)
(74) Vertreter: Münch, Otto, Dipl.-Ing.

(57) **Zusammenfassung**

Die Vorrichtung umfasst einen Kollektor (1) zum Zuführen von Reinigungsgas zu mehreren am Kollektor (1) befestigten, achsparallelen Reinigungsdüsen (2), wobei jeder Reinigungsdüse (2) je ein Schaltventil (10) zugeordnet ist. Das Ventil (10) steuert die Zufuhr des Reinigungsgases vom Kollektor (1) zur Düsenöffnung (19). Das Ventilgehäuse (25) des Ventils (10) liegt an einer ersten Wand (24) des Kollektors (1) an. Das Ventilgehäuse (25) hat seitliche Bohrungen (28) zu einer Ventilkammer (29). Der Ausgang des Ventils (10) wird durch ein Rohr (40) gebildet, das den Kollektor (1) sowie eine Bohrung (21) eines Flansches (15, 16) der Düse (2) durchsetzt. Die Düse (2) ist mittels einer auf das Rohr (40) aufgeschraubten Mutter (45) am Kollektor (1) befestigt. Querbohrungen (43) des Rohres (40) münden in einen Ringkanal (18), der in eine Ringspaltdüse (19) mündet. Mit der beschriebenen Vorrichtung wird ein einfacher Aufbau und eine kostengünstige Herstellung ermöglicht.

## Beschreibung

Aus der DE-C-197 01 983 ist eine Reinigungsvorrichtung gemäss Oberbegriff des Anspruchs 1 bekannt. Eine Ringspaltdüse umfasst einen Flansch bestehend aus einem oberen und einem unteren Ring, die zusammen einen Ringkanal und den Ringspalt bilden. Die Ringe sind durch mehrere über den Umfang verteilte Schrauben miteinander verschraubt. In den Flansch ist ein Schaltventil eingebaut, das in einer Ausführung als ringförmiges Membranventil ausgebildet ist. In einer anderen Ausführung ist es als Sitzventil mit einem Betätigungsstössel ausgebildet, der durch eine Membran betätigt wird. Ein gemeinsamer Kollektor für eine Reihe dieser Ringspaltdüsen ist mit diesen Düsen verschweisst. Die Steuerleitungen zu den Schaltventilen sind extern verlegt.

Der vorliegenden Erfindung liegt die Aufgabe zugrunde, eine Vorrichtung der eingangs genannten Art derart weiterzubilden, dass sie einfacher im Aufbau und kostengünstiger in der Herstellung ist. Diese Aufgabe wird durch die Merkmalskombination der Ansprüche gelöst.

Nachfolgend werden Ausführungsbeispiele der Erfindung anhand der Zeichnungen erläutert. Darin zeigt:
- Figur 1: einen Axialschnitt durch eine erste Ausführungsform,
- Figur 2: eine Seitenansicht,
- Figuren 3 und 4: eine zweite Ausführungsform, und
- Figuren 5 und 6: ein Filter mit der eingebauten Vorrichtung.

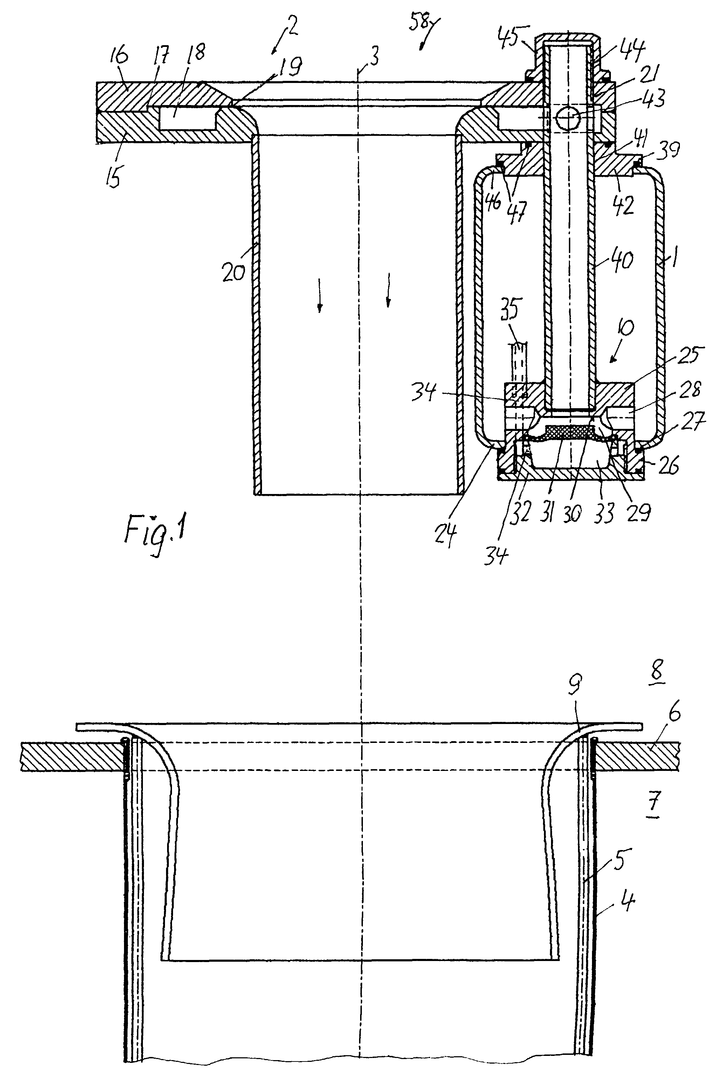

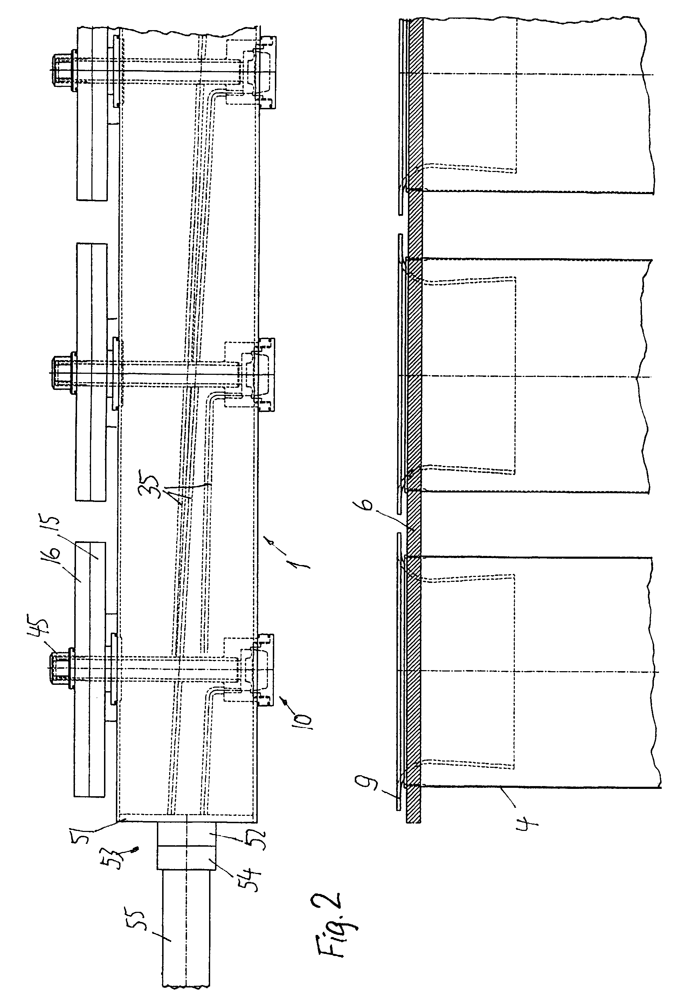

Die Reinigungsvorrichtung nach Figuren 1 und 2 umfasst einen Kollektor 1, welchem Reinigungsgas, z.B. Druckluft mit etwa 6 bar Speisedruck, zugeführt wird, sowie eine Reihe von Ringspaltdüsen 2. Die Düsenachse 3 ist vertikal und koaxial zu einem Filterschlauch 4, der durch einen Stützkorb 5 gespreizt und oben an einer Öffnung eines Filterbodens 6 eingehängt ist, der das Filter in einen Rohgasraum 7 und einen Reingasraum 8 unterteilt. Am oberen Ende des Stützkorbs 5 ist ein Venturirohr 9 angeschweisst. Jeder Düse 2 ist ein separates Ventil 10 zugeordnet.

Die Düse 2 hat einen aus zwei koaxialen Ringen 15, 16 bestehenden Flansch. Die Ringe 15, 16 sind durch eine Schulter 17 miteinander zentriert und an der Peripherie miteinander verschweisst oder verlötet. Sie umschliessen einen Ringraum 18, der in einen Ringspalt 19 von etwa 0,3 bis 0,4 mm Breite mündet. Ausgehend vom Ringspalt 19 ist der Ring 15 torusförmig abgerundet. Die zentrale Öffnung des Rings 15 mündet in ein angeschweisstes Rohr 20. Die Ringe 15, 16 haben an einer Stelle ihrer Peripherie eine achsparallele Durchgangsbohrung 21.

Das Ventil 10 hat ein als Drehteil ausgebildetes Ventilgehäuse 25, das mit einem Flansch 26 unter Zwischenlage eines O-Rings 27 an der unteren Wand 24 des Kollektors 1 anliegt. Mehrere radiale Bohrungen 28 verbinden den Innenraum des Kollektors 1 mit einer Ventilkammer 29, die oben von einem ebenen Ventilsitz 30 und unten durch eine in der Mitte verdickte Membran 31 begrenzt ist. Die Peripherie der Membran 31 wird mittels eines rohrförmigen Ansatzes einer Verschlussschraube 32 gegen das Gehäuse 25 gespannt. Die zwischen der Membran 31 und der Verschlussschraube 32 angeordnete Steuerkammer 33 ist über Bohrungen 34 an eine Steuerleitung 35, z.B. einen Schlauch, angeschlossen. Am Ventilgehäuse 25 ist ein koaxiales Rohr 40 befestigt, welches durch eine Bohrung 41 einer Deckscheibe 42 und die Bohrungen 21 durchgesteckt ist. Die Deckscheibe 42 liegt mit einem Flansch 39 an der oberen Wand 46 des Kollektors 1 an. Das Rohr 40 hat im Bereich des Ringkanals 18 mehrere Querbohrungen 43 und oben ein Aussengewinde 44, auf welches eine Hutmutter 45 aufgeschraubt ist. Die Scheibe 42 ist gegenüber der oberen Wand 46 des Kollektors 1 und gegenüber dem Ring 15 und die Mutter 45 gegenüber dem Ring 16 mit weiteren O-Ringen 47 abgedichtet.

Wie aus Figur 2 hervorgeht, sind alle Steuerleitungen 35 im Innern des Kollektors 1 verlegt. Dieser ist auf einer Stirnseite durch einen Deckel 51 abgeschlossen. An diesem Deckel 51 ist ein Mehrfach-Stecksockel 52 einer Mehrfachkupplung 53 befestigt. Die Leitungen 35 sind mit den einzelnen Anschlüssen des Stecksockels 52 verbunden. Der Stecker 54 der Kupplung 53 ist an ein pneumatisches Mehrfachkabel 55 angeschlossen.

Die beschriebene Reinigungsvorrichtung arbeitet wie folgt: Im Betrieb wird das zu filtrierende Rohgas durch ein Gebläse dem Rohgasraum 7 zugeführt und gelangt über die Filterschläuche 4 zum Reingasraum 8, wobei sich der im Rohgas enthaltene Staub an den Filterschläuchen 4 absetzt. In allen Steuerkammern 33 der Ventile 10 liegt der Steuerdruck an, so dass die Ventile 10 geschlossen sind. Periodisch wird nun jedes Ventil durch kurzfristiges Entlüften der Steuerkammer 33 über die Steuerleitung 35 mittels nicht dargestellter Magnetventile entlüftet, so dass das betreffende Ventil 10 kurzfristig während etwa 0,12 sec. öffnet. Das Reinigungsgas tritt mit hoher Geschwindigkeit aus der Ringdüse 19 aus. Wegen des Coanda-Effekts strömt der dünne Luftschleier entlang des torusförmigen Randes der Scheibe 15 mit hoher Geschwindigkeit. Dieser Reinigungsgasstrom reisst aus dem Reingasraum 8 eine Sekundärströmung 58 mit durch das Rohr 20, der oberhalb der Venturidüse 9 zusätzlich eine Tertiärströmung 59 induziert. Durch den dadurch bewirkten Druckstoss im Schlauch 4 werden dessen beim Filterbetrieb zwischen den Längsstäben des Stützkorbs 5 nach innen gewölbte Teile nach aussen geschleudert und somit der anhaftende Staub abgeschüttelt, was durch den kurzen Rückspül-Gasfluss unterstützt wird.

Je nach Belastung des Rohgases betragen die Reinigungsintervalle etwa 1 bis 10 min. Die Ventile 10 des gesamten Filters, also aller seiner parallel zueinander angeordneten Kollektoren 1, werden nacheinander geschaltet, damit der Druckstoss stromaufwärts des Rohgasraumes 7 minimiert ist. Bei sehr grossen Filtern mit vielen Schläuchen 4 können auch jeweils zwei oder drei Ventile 10 gleichzeitig geöffnet werden. Bei den am stärksten belasteten Filterschläuchen 4 im Bereich des Rohgaseintritts in den Raum 7 können die Reinigungsintervalle verkürzt werden. Der sichere Betrieb des Filters wird durch Messen der Druckdifferenz über den Filterboden 6 überwacht.

Die beschriebene Vorrichtung ist besonders einfach im Aufbau und in der Herstellung. Am Kollektor 1 fallen nur sehr wenig Schweissarbeiten an. Die Ventile 10 und Scheiben 42 sind einfache Drehteile. Die Montage der Ventile 10 und Düsen 2 mit einer einzigen Mutter 45 ermöglicht auch eine entsprechend leichte Demontage. Dadurch können die Kollektoren 1 länger ausgebildet werden, ohne das Handling übermässig zu erschweren. Zur Montage oder Demontage der Vorrichtung im Filter können nämlich die Düsen 2 entfernt werden, damit das Gewicht des Kollektors reduziert wird. Dies ist bei der eingangs genannten Vorrichtung nicht möglich. Bei dieser musste in der Praxis die Länge der Kollektoren aus Gewichtsgründen beschränkt werden. Weil die Steuerleitungen 35 im Innern des Kollektors 1 verlegt sind, sind sie geschützt und es können preiswerte Schläuche verwendet werden, während bei der eingangs beschriebenen Vorrichtung nichtrostende Stahlrohre eingesetzt werden mussten. Der Kollektor 1 mit den Düsen 2 ist leicht zu reinigen.

Verglichen mit Zyklonen wird ein wesentlich höherer Reinheitsgrad des Reingases erzielt. Ausserdem kann der gefilterte Staub zurückgewonnen und wiederverwertet werden, insbesondere wenn als Filterschläuche CIP-Schläuche (Clean-In-Place) verwendet werden.

Das Filter benötigt weniger Antriebsleistung für das Zufuhrgebläse als ein Zyklon. Die Investition in ein Filter der beschriebenen Art kann daher in relativ kurzer Zeit amortisiert werden.

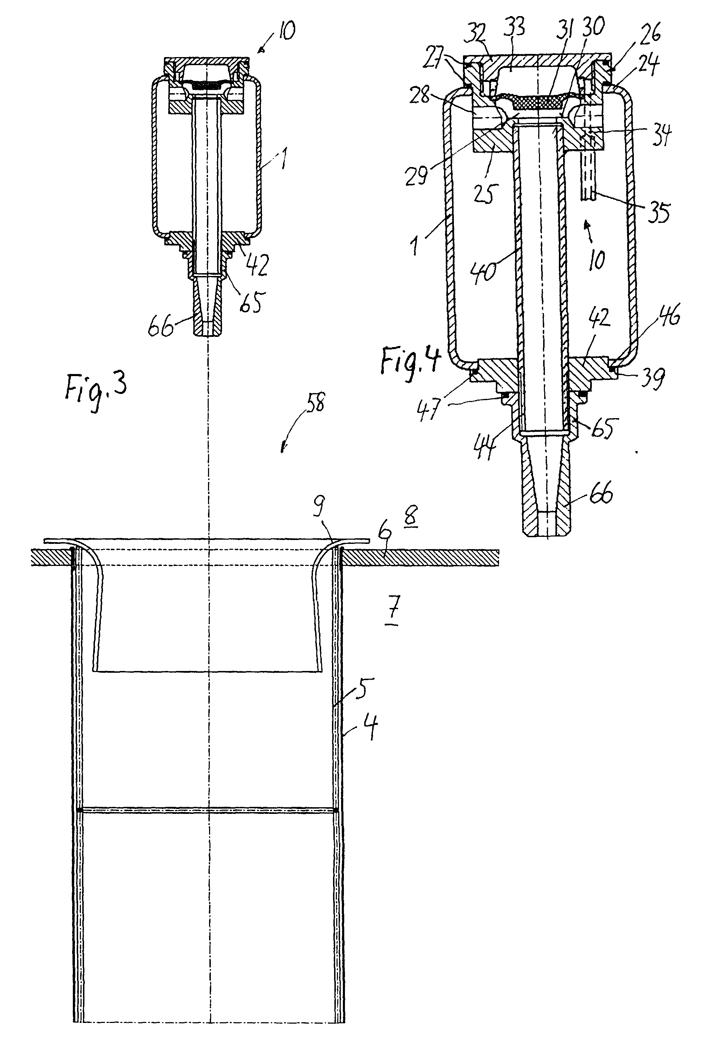

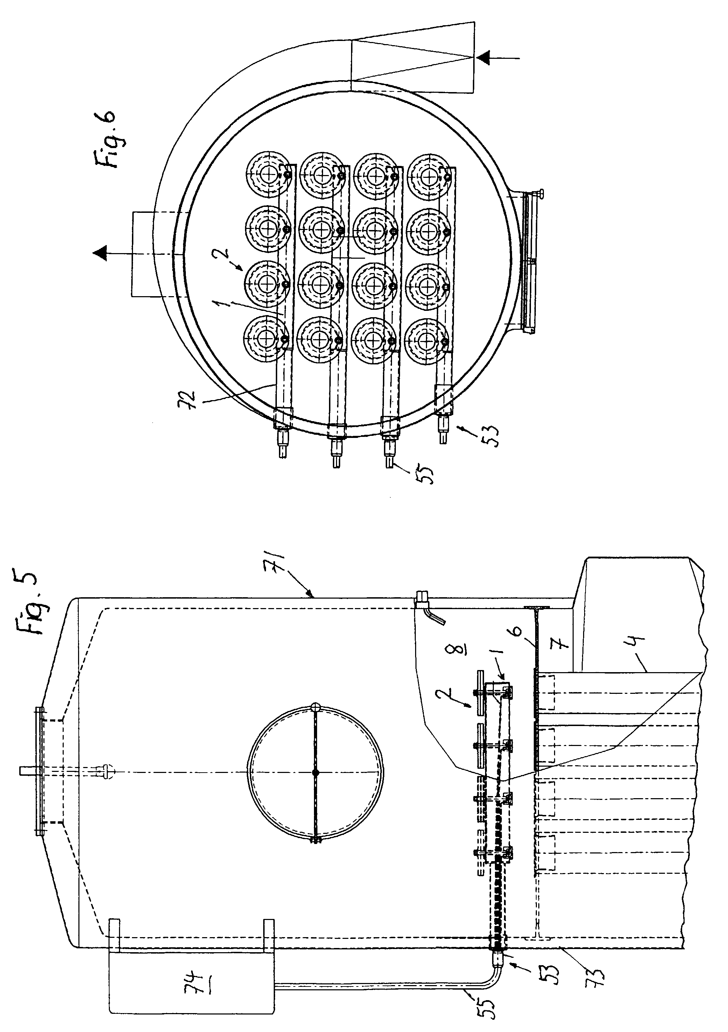

Bei der Vorrichtung nach Figuren 3 und 4 sind analoge Teile mit gleichen Bezugszeichen versehen, so dass sich eine detaillierte Beschreibung dieser Teile erübrigt. Bei dieser Vorrichtung ist die Wand 24, an der das Ventilgehäuse 25 anliegt, oben. Die Mutter 65 liegt direkt auf der Scheibe 42 an und ist einstückig mit der koaxialen Düse 66 ausgebildet. In die Lavaldüse 9 strömt also nebst dem Reinigungsgas aus der Düse 66 nur die Sekundärströmung 58. Diese Ausführungsform eignet sich vor allem für kürzere oder engere Filterschläuche 4, sowie für Abreinigungsdruckluft von geringerem Druck von z.B. 1,5 bis 3 bar von Schraubenverdichtern oder Drehkolbengebläsen.

Figuren 5 und 6 zeigen die in ein Filtergehäuse 71 eingebaute erfindungsgemässe Vorrichtung in einer Anwendung mit 16 Filterschläuchen 4. Der Deckel 51 ist an ein Verlängerungsrohr 72 angeschweisst, das mit der Gehäusewand 73 verschraubt ist. Die pneumatischen Mehrfachkabel 55 verbinden die vier Kupplungen 53 mit einem Steuergerät 74, welches die Magnetventile enthält. Eine der Leitungen des Mehrfachkabels 55 dient der Druckzufuhr zum Innern des betreffenden Kollektors 1. Da bei ein und demselben Kollektor 1 nur etwa alle 20 Sekunden eine der Düsen 2 betätigt wird, reicht die Druckluftzufuhr durch einen relativ engen Schlauch.

## Patentansprüche

1. Vorrichtung zur Reinigung eines Filters, umfassend einen Kollektor (1) zum Zuführen von Reinigungsgas zu mehreren am Kollektor (1) befestigten, achsparallelen Reinigungsdüsen (2, 66), wobei jeder Reinigungsdüse (2, 66) je ein Schaltventil (10) zugeordnet ist, welches die Zufuhr des Reinigungsgases vom Kollektor (1) zur Düsenöffnung steuert, dadurch gekennzeichnet, dass jedes Ventil (10) im oder am Kollektor angeordnet ist und dass die Reinigungsdüsen (2, 66) mit dem Kollektor (1) verschraubt sind.

2. Vorrichtung nach Anspruch 1, wobei das Ventilgehäuse (25) des Ventils (10) an einer ersten Wand (24) des Kollektors (1) anliegt, wobei das Ventilgehäuse (25) seitliche Bohrungen (28) zu einer Ventilkammer (29) aufweist, wobei der Ausgang des Ventils (10) durch ein Rohr (40) gebildet wird, das den Kollektor (1) durchsetzt und mittels einer aufs Rohr (40) aufgeschraubten Mutter (44, 65) am Kollektor befestigt ist.

3. Vorrichtung nach Anspruch 2, wobei die Düse als Ringspaltdüse (2) ausgebildet ist und einen Flansch (15, 16) mit einem Ringkanal (18) aufweist, der mit dem Ringspalt (19) kommuniziert, wobei der Flansch (15, 16) eine Durchgangsbohrung (21) aufweist, durch welche das Rohr (40) durchgesteckt ist, wobei der Flansch (15, 16) mittels der vorzugsweise als Hutmutter ausgebildeten Mutter (44) auf die zweite Wand (46) des Kollektors (1) aufgeschraubt ist, und wobei das Rohr (40) mindestens eine in den Ringkanal (18) mündende Querbohrung (43) aufweist.

4. Vorrichtung nach Anspruch 3, wobei der Flansch aus zwei den Ringkanal (18) und die Ringspaltdüse (19) begrenzenden Ringen (15, 16) besteht, die vorzugsweise miteinander verschweisst oder verlötet sind.

5. Vorrichtung nach Anspruch 2, wobei die Düse (66) koaxial an der Mutter (65) angeformt ist.

6. Vorrichtung nach einem der Ansprüche 2 bis 5, wobei in die der ersten Wand (24) gegenüberliegende zweite Wand (46) des Kollektors (1) eine Ringscheibe (42) eingesetzt ist mit einer zentralen Bohrung (41), durch welche das Rohr (40) durchgesteckt ist, wobei die Ringscheibe (42) und das Ventilgehäuse (25) je einen Flansch (26, 39) aufweisen, der von aussen abdichtend gegen die betreffende Wand (24, 46) anliegt.

7. Vorrichtung nach einem der Ansprüche 2 bis 6, wobei die Ventilkammer (29) einerseits durch einen Ventilsitz (30) mit einer zentralen, ins Rohr (40) mündenden Öffnung und andererseits durch eine das Ventilglied bildende Membran (31) begrenzt ist, wobei auf der der Ventilkammer (29) gegenüberliegenden Seite der Membran (31) eine Steuerkammer (33) angeordnet ist, die mit einer Steuerleitung (35) verbunden ist.

8. Vorrichtung nach einem der Ansprüche 1 bis 7, wobei alle Steuerleitungen (35) zu den Schaltventilen (10) im Innern des Kollektors (1) verlegt sind.

9. Vorrichtung nach einem der Ansprüche 1 bis 8, wobei alle Steuerleitungen (35) zu den Schaltventilen (10) des Kollektors (1) an eine gemeinsame Mehrfachkupplung (53) angeschlossen sind.
